# EUROPEAN PATENT APPLICATION

(11) **EP 1 441 559 A2**
(43) Date of publication of application: **28.07.2004**
(21) Application number: 04100717.0
(22) Date of filing: 08.12.2000
(51) Int. Cl.: H04Q 7/38

(54) **Channel allocation in a communication system**

(62) Divisional of application: 00403456.7
(71) Applicant: MOTOROLA, INC., Schaumburg, IL 60196 (US)
(72) Inventor: Fouilland, Pascal, Tournefeuille (FR); Abdesselem, Ouelid, Toulouse (FR)
(74) Representative: Gibson, Sarah Jane

(57) **Abstract**

This application relates to a method of operation of a communication device in a communication system, the method comprising the steps of soft combining data obtained from first and second channels to obtain data which is then decoded.

## Description

This application relates to channel allocation in a TDMA communication system. The invention also relates to a communication device and a communications network using the new channel allocation and to a method of receiving channels in a communication device of a communication system

In known and currently proposed communication systems a plurality of base stations are provided, each base station being able to communicate with mobile stations within range of the base station to provide communication services to those mobile stations.

Each communication system is allocated only a finite amount of spectrum with which to provide communication services to mobile stations. One common method of maximising the number of users the system can support is to split the available frequency spectrum into a number of different frequency carriers, and to allow different users to use the same frequency carrier at different times (so-called Time Division Multiple Access or TDMA systems).

In TDMA systems such as the well-known GSM (Global System for Mobile communications) or EDGE (Enhanced Data rates for GSM Evolution) systems, each frequency carrier carries a multi-frame comprising a number of frames divided into timeslots. In the GSM system, for example, a multi-frame comprises 51 frames, each having 8 timeslots, whereas in the EDGE system a multi-frame comprises 52 frames, each having 8 timeslots. Logic or traffic channels between a mobile station and a base station are provided by a sequence of timeslots on the same or different frequency carriers. The changing of frequency used by the channel is called frequency-hopping. A base station allocating a channel to a mobile station will inform the mobile station of the frequency law and timeslot allocation for the channel.

Typically, both the timeslot and frequency carrier will change during the sequence to reduce the impact of interference on the channel and therefore maximise the quality of the communication link. However, it is desirable to improve still further the ability of a TDMA communication system to ensure an adequate communication link quality.

It is sometimes necessary to handover a mobile station from one base station to another. If a handover of a mobile station is required when a call is ongoing, the traffic channel and associated signalling must be transferred from the original serving base station to the new target base station such that no data is lost and the handover is transparent and seamless from the point of view of the user.

In the existing GSM system, when the need for a handover is detected, the traffic channel and associated signalling are transferred from the original base station to the target base station. However, even with efficient signalling some of the traffic data may be lost during the handover. In addition if the mobile station is unable to establish the new channel with the target base station, the mobile station must re-establish a channel with the previously serving cell. During the delay to re-establish the channel traffic data will be lost, and in the worst case the call will be terminated as a result of a failed handover. This is clearly highly undesirable and so a robust handover mechanism, which is relatively simple to implement in the base station and in the mobile station of a TDMA communication system, is required.

As is well known, adverse channel conditions introduce errors into the data received on the radio interface of a wireless communication system. Various mechanisms are employed to minimise the impact of these errors on the integrity of the data. However, it is desirable to provide a new way of improving the correction of errors in data received on the radio interface of a wireless communication system.

In accordance with a first aspect of the present invention, there is provided a method of operation of a communication device in a communication system as recited in claim 1 of the accompanying claims.

The invention also provides a mobile station operating in accordance with this method.

The method in accordance with the invention is particularly useful for combining information received by a mobile station from at least two different channels carrying the same information data. Although its use in a TDMA communication system with partial rate channels as outlined above is particularly advantageous, this aspect of the invention is not limited to such a system but is instead applicable to any communication system. In particular, this method is also applicable to Code Division Multiple Access (CDMA) communication systems, such as the proposed Universal Mobile Telecommunication System (UMTS).

For a better understanding of the present invention, and to show how it may be brought into effect, reference will now be made, by way of example, to the accompanying drawings, in which:
Figure 1a illustrates the data flow between the network and a mobile station in a first arrangement in accordance with an embodiment of the invention;
Figure 1b illustrates the data flow between the network and a mobile station in a second arrangement in accordance with an embodiment of the invention
Figure 2 illustrates the reception and decoding elements of an exemplary mobile station;
Figure 3 illustrates combination of received blocks on a first and second TDMA channel received at the mobile station;
Figure 4a is a diagramatic representation of an first alternative arrangement of the reception and decoding elements of an exemplary mobile station,
Figure 4b is a diagramatic representation of an second alternative arrangement of the reception and decoding elements of an exemplary mobile station;
Figure 5 illustrates a first timeslot allocation;
Figure 6 illustrates a second timeslot allocation;
Figure 7 illustrates a third timeslot allocation;
Figure 8 illustrates a fourth timeslot allocation;
Figure 9 shows a handover method in accordance with an exemplary embodiment of the invention;
Figure 10 illustrates signalling and traffic flow during handover in accordance with an embodiment of the invention;
Figure 11 illustrates signalling and traffic flow during an intra-base station handover; and
Figure 12 illustrates the application of the invention to a hierarchical cell arrangement.

The invention will now be described with reference to the accompanying drawings in which the same or similar parts have been given the same reference numerals. Although described with reference to the GSM and EDGE systems, the described use of the primary and secondary channels and method of handover are applicable to any TDMA system. The soft combining at the mobile station is applicable to any communication system, but can advantageously be used in the described TDMA system.

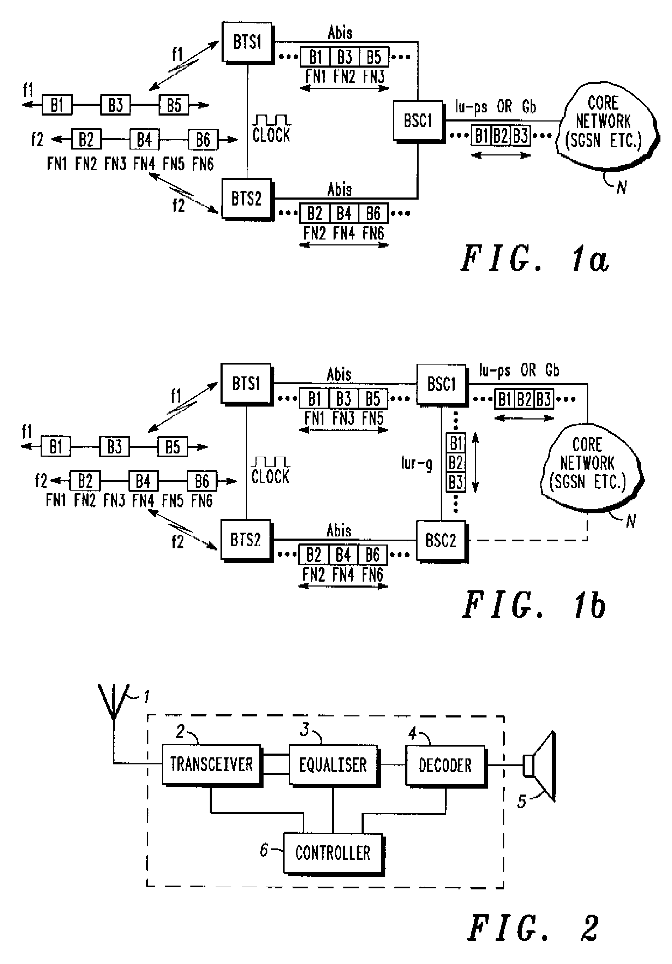

The data flow between the network and a mobile station when the primary and secondary partial rate channels in accordance with the first aspect of the invention are being used will be described with reference to Figures 1a and 1b. In the described advantageous exemplary embodiments the same information data is being transferred between the mobile station and the network on complementary half rate channels.

Figure 1a illustrates the data flow between the network and a mobile station when the two half rate channels are set up via first and second Base Transceiver Stations (BTS1 and BTS2) which share a Base Station Controller (BSC1). As is well known, the BSC1 communicates with a core network N over an lu-ps interface or Gb interface or over a circuit-switched interface such as an A interface or an lu-cs interface, and communicates with the BTS1 and the BTS2 over the Abis interface. The BTS1 and BTS2 are synchronised, as shown by the clock connection BTS1 and BTS2 communicate with a mobile station (not shown) via a primary and a secondary channel f1 and f2, respectively.

Figure 1b illustrates the data flow between the network and a mobile station when the two complementary half rate channels are set up via first and second Base transceiver stations (BTS1 and BTS2) which do not share a common Base Station Controller (BSC). In this situation, the Base Station Controllers BSC1 and BSC2 respectively associated with the Base Transceiver Stations BTS1 and BTS2 are linked by an lur-g interface. Otherwise the arrangement is the same as that shown in Figure 1a.

As explained previously, in the illustrated embodiment the primary and the secondary channel f1 and f2 are complementary half rate channels. These channels have been set up as complementary half rate channels under the control of the primary BSC1, either directly (in the case of both f1 and f2 in Figure 1a as well as f1 in Figure 1b), or indirectly (transparently via BSC2) in the case of Figure 1b. As is clear from a consideration of Figures 1a and 1b, the complementary half rate channels f1 and f2 are allocated alternate frames of a multiframe

Three information data blocks B1, B2 and B3 are shown for reference. As shown in Figures 1a and 1b, BSC1 receives information data blocks from, and transmits information data blocks to the core network N over the lu-ps or the Gb interface, or over a circuit-switched interface such as the A interface or the lu-cs interface. BSC1 sends the information data blocks to, or receives the information data blocks from BTS1 and BTS2. In the arrangement shown in Figure 1a, the information data blocks are transmitted directly across the respective Abis interface. in the arrangement shown in Figure 1b the information data blocks to or from BTS1 are transmitted across the Abis interface and the information data blocks to or from BTS2 are transmitted transparently by the BSC2 across the Abis and the lur-g interfaces.

For downlink data BTS1 and BTS2 perform channel coding and any puncturing that is being applied, in accordance with conventional techniques that will be known to a skilled person, before transmitting the resulting channel information on the half rate sub-channels f1 and f2, respectively. Although, as described above, the same information data block is transmitted to the mobile station via channel f1 and via channel f2, different puncturing schemes and/or coding schemes may be used in the two channels This difference in the channel data actually transferred on the two channels can provide additional information which can be used to correct errors in the received data.

For uplink data the channel data received at BTS1 and BTS2 on channels f1 and f2 respectively is decoded and the resulting information data is passed to BSC1 (over the Abis interface or transparently through the BSC2 via the Abis and lur-g interface) and then on to the network N. Since one or other of the channels f1 and f2 may suffer from interference from time to time, the BSC1 can use the data from the other channel to ensure faithful transfer of the data

In the described embodiment the radio blocks are synchronised on a frame number basis as the channels can be received more easily. However, this is not essential to synchronise the radio blocks in this way.

Of course, it would also be possible to transmit alternate blocks on each of the two complementary sub-channels f1 and f2. Clearly, this would double the capacity of the link to the mobile station compared with the embodiment described above, although at the expense of the robustness provided by the above-described method.

Although the mobile station has two channels established only one of the channels carries associated signalling or control information. As a result, the mobile station can only receive power control information from, and report power measurements to, the base station with which a signalling link is established This would mean that in the event that there is a significant difference between the reception paths from the two cells, the mobile station would receive data blocks from only the serving cell, with which a signalling link is established.

In a similar way, the timing advance is controlled by the serving cell base station. Since the two cells are synchronised, the mobile station is able to evaluate the timing difference between them by monitoring the delay between the downlink paths. The mobile station can use this information to calculate the timing advance to be used towards the other BTS

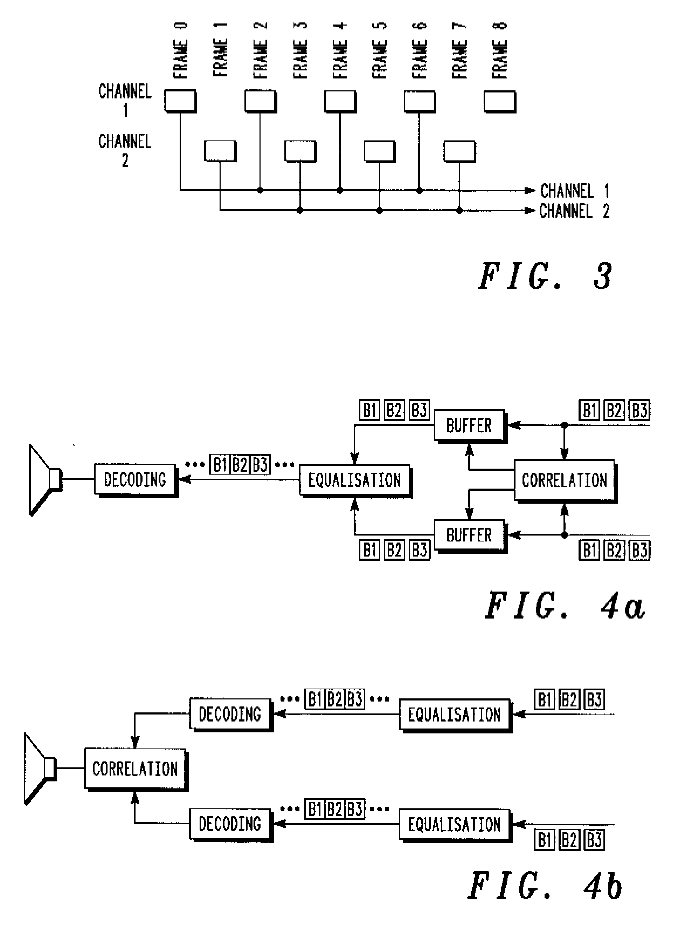

The operation of the mobile station when receiving two channels carrying the same information data, in accordance with an embodiment of the present invention, will now be described with reference to Figure 2, which shows the reception and decoding elements of a mobile station.

The reception and decoding elements of the mobile station shown in Figure 2 has an antenna 1 for receiving signals from a communication network. The antenna 1 Is connected to a transceiver 2. The receive portion of the transceiver 2 is coupled to an equaliser 3, which in turn is coupled to a decoder 4. The output of the decoder is then output 5 for use by the mobile station, for example to be output as speech. A controller 6 controls the operation of the reception and decoding elements of the mobile station. Parts which are not relevant to the description of the invention have been omitted, as these will be clear to a skilled person.

In order for the mobile station to receive a first and a second channel, the controller 6 controls the transceiver to receive first and second channel data on the first and the second channel respectively. The first and second channel data is passed to the equaliser 3 which channel decodes the received channel data and soft combines the resulting symbols.

For soft combining of the received data an indication of the reliability of the decoded data is provided as well as the data itself. As the mobile station is receiving the same data via the two channels, the more reliable data can be retained and the less reliable data can be discarded. The use of different puncturing schemes for the two channels will result in the reception in the mobile of two different channel data sets corresponding to the same information data, and this additional information may further assist decoding and error correction in the mobile.

The implementation of this aspect of the invention in a TDMA communication system, for example in which complementary half rate channels in accordance with the described exemplary embodiment are used, is particularly advantageous, as is illustrated Figure 3.

If the transmitted radio blocks are not synchronised on a block by block basis, it is necessary for the mobile station to correlate the radio blocks received on the different channels. This correlation can be performed before the equalisation, in order to perform soft combining, or after voice decoding. These arrangements are shown in Figures 4a and 4b.

In order to avoid a requirement for two transceivers in the mobile station, the timeslot (TS) allocations for the complementary sub-channels f1 and f2 should enable the mobile station to alter its uplink and downlink timeslot allocation from frame to frame so as to receive and transmit on both sub-channels. As will be known to a person skilled in the art, the timeslot combinations which can be used by a mobile station depend on the multislot class of the mobile station, since the multislot parameters (Tta, Ttb, Tra, and Trb) associated with the multi-slot class must be adhered to in order to enable the mobile station to move its time reference between adjacent frames.

The available channel allocations for cell 1 and cell 2 are:
for multislot class 1, the same timeslot N shall be used
for multislot classes 2-7, timeslot N or N+/-1 shall be used
for multislot classes 8-11, timeslot N, N+/-1 or N+/-2 shall be used
for multislot class 12, timeslot N, N+/-1, N+/-2 or N+/-3 shall be used.

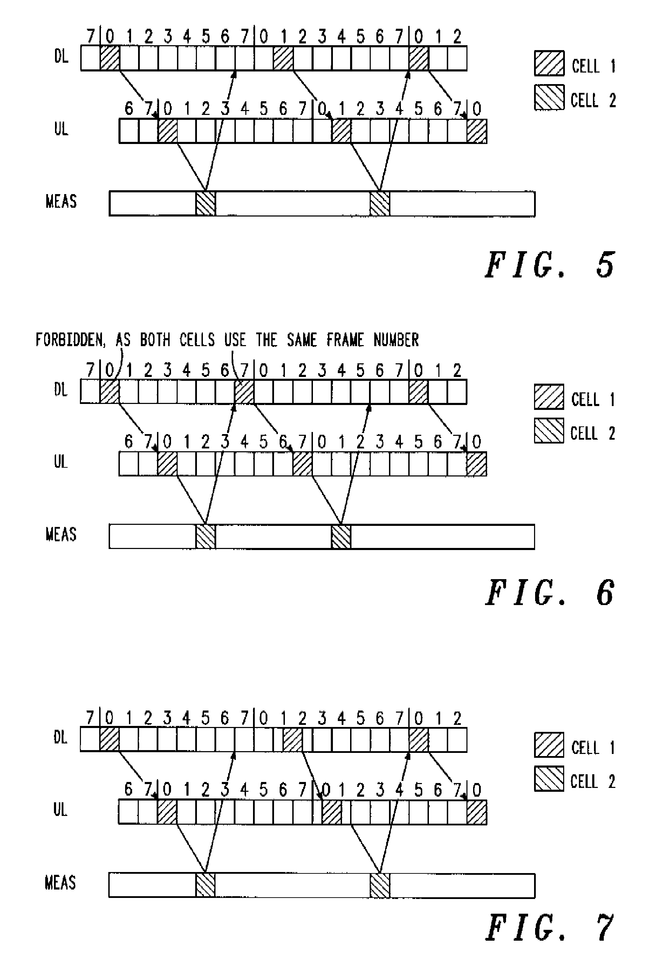

For example, a multislot class 2 mobile station (ie capable of a maximum of 2 Rx channels and one Tx channel) might have timeslot TS0 allocated on cell 1 and timeslot TS1 allocated on cell 2, as shown in Figure 5.

However, it should be noted that the timeslot allocation possibilities are limited by the requirement that the timeslots relating to the channel allocated in cell 1 must always be in a different frame from the timeslots relating to the channel allocated in cell 2. Thus an allocation such as that shown in Figure 6, which would otherwise satisfy the allocation requirement as set out above, is impermissible.

It should be noted that the difference on the timing advance to be used on the target cell and the serving cell does not impact the Tra parameter (ie the time to perform measurements and be ready to receive, as is clear from Figure 7)

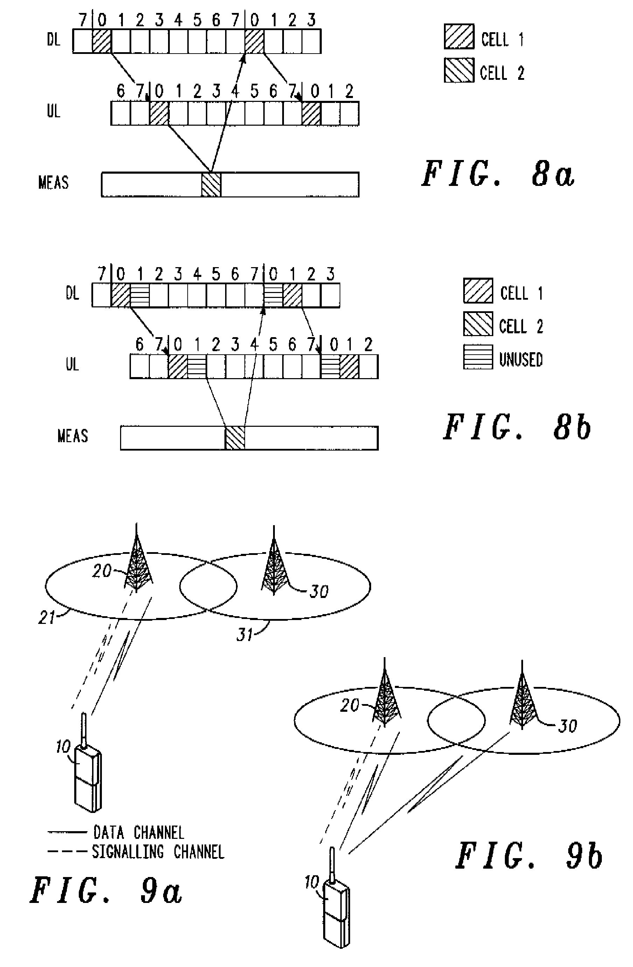

Alternatively, timeslots can be allocated with the same constraints as if they were both allocated to a single cell. Thus, a mobile station supporting 1 Tx slot (multislot class 1-4) shall have the same TS allocated on both cells. An example for a multi-slot class 1 mobile is shown in Figure 8a. A multislot class 5 MS may have TS0 allocated on the serving cell and TS1 allocated on the target cell, as if TS0 and TS1 were continuously allocated as shown in Figure 8b.

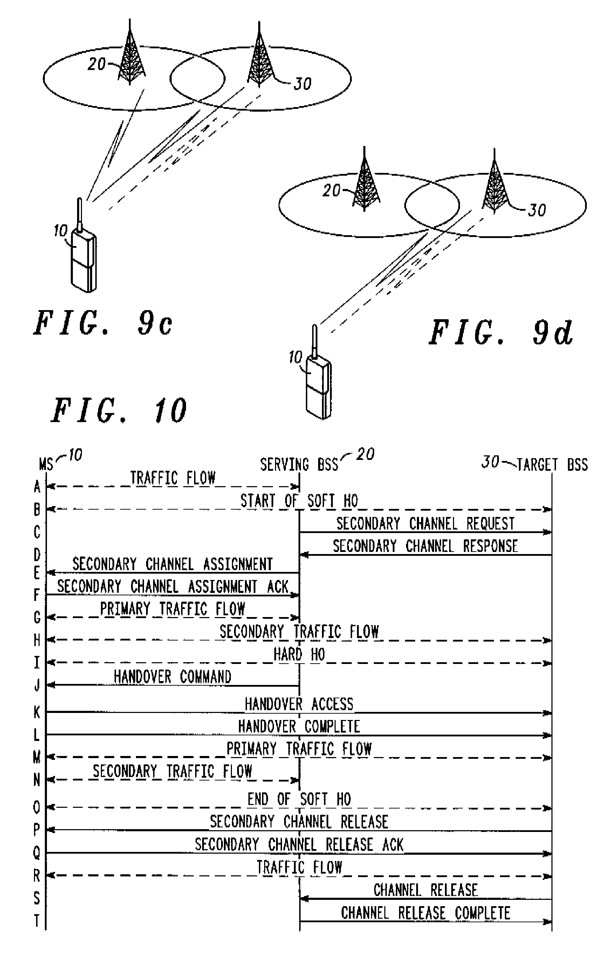

A handover method in accordance with an exemplary embodiment of the invention will now be described with reference to Figure 9. In accordance with the first embodiment of the present invention, a mobile station 10 in an existing call with the base station 20 of the serving cell 21 (Figure 9a) is communicating with the serving base station 20 using a partial rate channel (half rate channel or quarter rate channel) which carries both traffic and signalling information.

In the most preferred embodiment of the invention the existing channel is a partial rate channel, for example a half rate channel. However, the situation in which the existing channel is a full rate channel which is changed to a half rate channel at the start of the handover in accordance with this embodiment of the invention is also envisaged.

As the mobile station 10 approaches the cell boundary of the serving cell 21, a second partial rate channel (for example quarter rate channel or half rate channel) is set up with the base station 30 of the target cell 31 (Figure 9b). The new partial rate channel set up with the base station 30 of the target cell carries only traffic information.

As the mobile station 10 moves into the target cell 31 the signalling link is switched from the initially serving cell 21 to the target cell 31 (Figure 9c). Thus, the partial rate channel between the mobile station 10 and the base station 30 of the target cell now carries signalling and traffic information, and the partial rate channel between the mobile station 10 and the base station 20 of the initially serving cell carries only traffic information.

Finally, once the mobile station 10 moves further into the target cell 31 the partial rate channel between the mobile station 10 and the initially serving base station 20 is relinquished, and the handover is complete (Figure 9d).

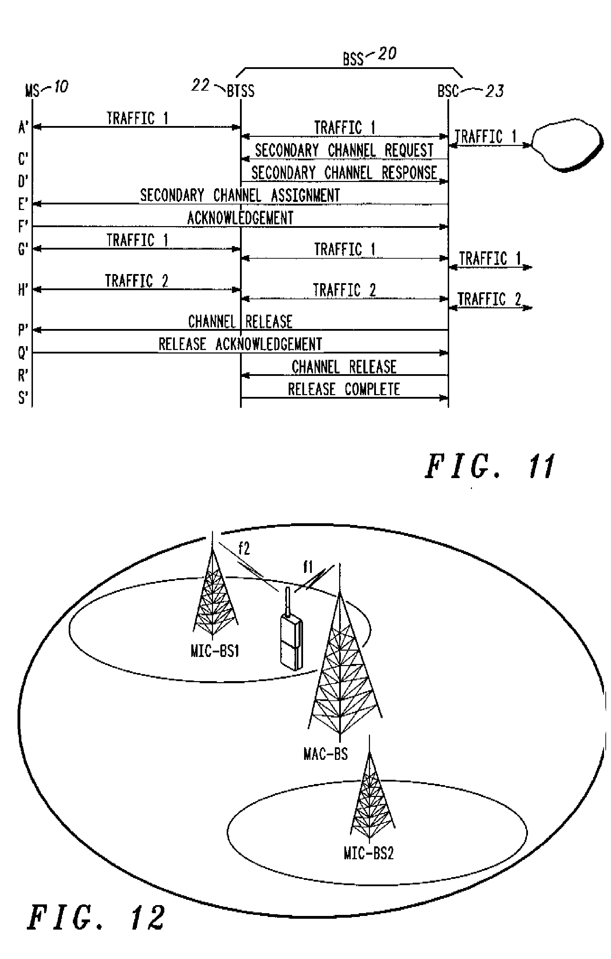

The signalling and traffic flow between the mobile station 10, the serving base station 20 and the target base station 30 during the handover in accordance with the embodiment of the invention will now be described with reference to Figure 10.

With reference to Figure 10, initially the mobile station 10 is communicating with the serving base station 20 using a partial rate channel (half rate channel or quarter rate channel) which carries both traffic and signaling information (step A). This situation corresponds to the situation shown in Figure 9a. When a handover requirement is determined (step B) the serving base station 20 requests the target base station 30 to allocate a secondary channel to the mobile station 10 (step C). As indicated previously, in accordance with the exemplary embodiment of the invention the secondary channel allocated by the target base station 30 is a partial rate channel. This new partial rate secondary channel carries only traffic information: the signalling link is maintained with the initially serving base station 20.

Once the serving base station 20 receives the secondary channel request response from the target base station 30 (step D) the serving base station 20 informs the mobile station 10 of the secondary channel assignment ie the timeslot, frequency law and sub-channel number for the secondary channel (step E). The mobile station 10 acknowledges the secondary channel assignment to the serving base station 20 (step F). Thereafter the mobile station 10 exchanges traffic information with the serving base station 20 on the primary channel (step G) and exchanges traffic information with the target base station 30 on the secondary channel (step H). This situation is the same as that depicted in Figure 9b.

This situation may continue until the mobile station 10 moves into the target cell 31 and the signalling link is switched from the initially serving cell 21 to the target cell 31 as shown in Figure 1c. At the start of hard handover (step I), the serving base station 20 sends a handover command to the mobile station 10 (step J). In response to the handover command, the mobile station 10 sends a handover access request to the target base station 30 (step K) followed by a handover complete message (step L). At this point the signalling control link is moved from the originally serving base station 20 to the target base station 30. The mobile station 10 exchanges traffic information with the target base station 30 on the primary channel (step M) and exchanges traffic information with the originally serving base station 30 on the secondary channel (step N).

At the end of the handover (step O) the target base station sends a secondary channel release message to the mobile station (step P). On receipt of this message, the mobile station 10 acknowledges the secondary channel release (step Q) and releases the secondary channel (carrying traffic only) with the originally serving base station 20. Once the target base station 30 has received the secondary channel release acknowledgement, the target base station 30 informs the originally serving base station 20 of the channel release (step S). Once the secondary channel release acknowledgement is received from the originally serving base station (step T) the handover is complete. This corresponds to the situation in Figure 9d.

Of course, if a full rate channel is desired between the mobile station and the new serving base station 30 this can be achieved with conventional signaling and channel reassignment.

Although handover between a first base station 20 and a second base station 30 has been described, it is not necessary for the handover to occur between two base stations. In an alternative embodiment of the invention described with reference to Figure 11, an intra base-station handover can be achieved. In Figure 11 a mobile station 10 is in an established call with a serving base station 20, comprising a BTS 22 and a BSC 23.

Initially a primary traffic channel is established between the mobile station 10 and the BTS of the base station and this traffic information is routed through the BSC 23 to the network N (step A') In order to perform an intra base station handover, the BSC23 requests a secondary channel assignment from the BTS 22 (stepC'). Once the BSC is notified of the secondary channel (step D') the BSC 23 informs the mobile station 10 of the secondary channel assignment (step E'). Once the secondary channel assignment has been cknowledged by the mobile station (step F'), the secondary traffic path to the network N is set up through the BTS 22 and the BSC 23 (step H') in addition to the existing primary traffic path (G').

In order to complete the intra base station handover, a channel release message is sent from the BSC 23 to the mobile station 10 (step P'). Once the mobile station acknowledges the channel release message (step Q') the BSC 23 informs the BTS 22 of the cannel release (step S'). Once the channel release is acknowledged, (step T') the intra-base station handover is complete.

Equally, although the establishment of the primary and secondary channels have been described in the context of a handover between one base station and another or in the context of intra-base station handover, in an alternative advantageous embodiment of the invention parallel primary and secondary channels may be established with one or more base stations during normal operation and not necessarily during a handover. The setting up of the primary and secondary channels in this situation is similar to that described above with reference to Figures 10 and 11, with the omission of the steps relating to the detection of a handover condition, the transfer of the signalling link from one base station to another (in the inter-base station handover situation described with reference to Figure 10) and the subsequent release of one of the channels.

The use of the invention is particularly advantageous in a hierarchical cell situation, in which, for example, the areas covered by several micro or pico-cells fall wholly or partly within the area covered by a macro-cell. Figure 12 shows such an arrangement, where the macro-cell is served by a macro-cell base station (MAC-BS) and a micro-cell is served by a micro-cell base station (MIC-BS1 and MIC-BS2). Problems in providing adequate coverage to a mobile station 10 in such situations is well known. A solution in accordance with an embodiment of the invention is to establish a partial rate link with the base station of the macro cell (MAC-BS) and a second partial rate link with the base station of the micro cell (MIC-BS1). As the mobile moves within the macro cell the partialrate link to the macro-cell base station (MAC-BS) is maintained and the partial rate channel to the base station of the micro cell (MIC-BS1) is handed over to the base station of another micro cell (MIC-BS2). Thus a traffic channel is always maintained with the macro-cell leading to improved performance of the system owing to the reduced likelihood that the call will be dropped as the mobile station moves between cells.

In addition, the allocation of two partial rate channels between a mobile station 10 and its serving base station provides useful frequency diversity. Allocation of one of the partial rate channels can be changed using the intra base station handover described above with reference to Figure 11 in order to select the optimum channel (with minimum interference) and so provide the best service to the mobile station.

In order to achieve space diversity as well as frequency diversity, a base station and associated relay, such as shown in Figure 12 may advantageously be used.

Thus, aspects of the present invention provide channel/frequency diversity as well as space diversity provide improved quality, in particular during handover as no speech samples will be lost. Capacity gains can be realised from using two HR or QR channels instead of one FR channel under medium or bad radio conditions. The vunerability of these channels will be compensated by the double path towards two cells.

## Claims

1. A method of operation of a communication device (10) in a communication system comprising: receiving channel data on a first channel and obtaining first data therefrom, at least a portion of the first data being soft data; receiving channel data on a second channel and obtaining second data therefrom, at least a portion of the second data being soft data; combining said first and second data to obtain third data, wherein soft combining at least a portion of the data received on the first channel and the data received on the second channel to obtain the third data; and decoding the obtained third data.

2. A method of operation of a communication device as claimed in claim 1 where the first and second channels are TDMA partial rate channels

3. A method of operation of a communication device as claimed in claim 2 wherein the TDMA partial rate channels are complementary TDMA sub-channels.

4. A method of operation of a communication device as claimed in claim 2 wherein the TDMA partial rate channels are half rate channels.

5. A method of operation of a communication device as claimed in claim 1 wherein the first and second channels are CDMA channels.

6. A method of operation of a communication device as claimed in any one of claims 1-5 wherein the channel data sent on the primary and secondary channels is different owing to different puncturing schemes or channel coding schemes.

7. A communication device (10) adapted to perform the method steps of any one of claims 1-6 performed by the communication device (10).
